# DEMANDE DE BREVET EUROPEEN

(11) **EP 3 505 893 A2**
(43) Date de publication de la demande: **03.07.2019**
(21) Numéro de dépôt: 18209891.3
(22) Date de dépôt: 03.12.2018
(51) Int. Cl.: G01L 1/18, G01L 1/20

(54) **DALLE DE DETECTION POUR REVETEMENT DE SOL ET SYSTEME DE DETECTION**

(30) Priorité: 27.12.2017 FR 1763257
(71) Demandeur: GERFLOR, 69100 Villeurbanne (FR)
(72) Inventeur: FERLAY, Charles, 69770 MONTROTTIER (FR); PUECH, Bastien, 69770 MONTROTTIER (FR)
(74) Mandataire: Cabinet Laurent & Charras

(57) **Abrégé**

L'invention concerne une dalle de détection pour revêtement de sol comprenant au moins successivement, une couche d'envers, une couche intercalaire élastique et une couche capteur liées ensemble, la couche d'envers comprenant au moins deux éléments conducteurs, la couche capteur comprenant au moins un élément piézorésistif disposé au droit des deux éléments conducteurs, et la couche intercalaire élastique présentant au moins une ouverture mettant en vis-à-vis l'élément piézorésistif et les deux éléments conducteurs de sorte qu'une certaine pression exercée sur ledit élément piézorésistif permet de déplacer ledit élément piézorésistif au travers de l'ouverture pour établir une connexion électrique entre les deux éléments conducteurs.

## Description

### DOMAINE TECHNIQUE

La présente invention concerne le secteur technique des dalles de détection pour revêtement de sol permettant de détecter une pression appliquée sur le revêtement ou encore la présence d'une personne. Plus précisément, l'invention concerne les dalles de détection pour revêtement de sol sportif. Ces dalles peuvent notamment se placer sous un revêtement de sol sportif de manière à détecter une pression exercée par un sportif ou un objet à la surface du revêtement.

### ART ANTERIEUR

Il est connu de l'état de la technique des dalles de détection pour revêtement de sol sportif utilisant des capteurs de force. Ces capteurs de force permettent de proposer des programmes d'entrainement pour les sportifs de haut niveau en mesurant la force exercée par le sportif en différents points du revêtement. Les capteurs utilisés sont cependant très épais et rigides et sont intégrés dans l'épaisseur du revêtement de sol après usinage de celui-ci. De ce fait, le positionnement des capteurs créé une différence d'enfoncement du revêtement de sol en réaction à une force appliquée à sa surface entre les zones présentant un capteur et les zones sans capteur. Le revêtement de sol présente donc au niveau des capteurs une dégradation de ses performances de poinçonnement, de réduction de force et de restitution d'énergie ce qui n'est pas souhaitable et engendre un fort risque de blessures pour le sportif.

Il est également connu des dalles de détection pour revêtement de sols comprenant des capteurs piézoélectrique. Cependant, ces capteurs permettent de détecter une modification de pression exercée en surface du revêtement de sol mais ne permettent pas de détecter une personne ou un objet immobile.

### EXPOSE DE L'INVENTION

L'invention a pour but de proposer une dalle de détection pour revêtement de sol :
- De faible épaisseur, préférentiellement inférieure à 2 mm voire inférieure à 0,6 mm.
- Permettant de mesurer des pressions appliquées de façon statique et dynamique.
- Suffisamment robuste pour résister à un passage de 25000 cycles minimum d'une chaise à roulettes tel que défini dans la norme ISO 20 4918 ou NF EN 425.
- Permettant de conserver des performances mécaniques du revêtement de sol homogène sur toute la surface de détection, notamment de poinçonnement de réduction de force, de déformation verticale, de glissance, de rebond de balle et de restitution d'énergie.
- Présentant une réponse proportionnelle du capteur en fonction de la force exercée.
- Etanche vis-à-vis du nettoyage.
- Facilement intégrable sans modifications du revêtement de sol.

A cet effet, il est proposé une dalle de détection pour revêtement de sol comprenant au moins successivement, une couche d'envers, une couche intercalaire élastique et une couche capteur liées ensemble, la couche d'envers comprenant au moins deux éléments conducteurs, la couche capteur comprenant au moins un élément piézorésistif disposé au droit des deux éléments conducteurs, et la couche intercalaire élastique présentant au moins une ouverture mettant en vis-à-vis l'élément piézorésistif et les deux éléments conducteurs de sorte qu'une certaine pression exercée sur ledit élément piézorésistif permet de déplacer ledit élément piézorésistif au travers de l'ouverture pour établir une connexion électrique entre les deux éléments conducteurs.

La couche intercalaire élastique permet de définir un espacement entre la couche capteur et la couche d'envers. Cet espacement est notamment déterminé par l'épaisseur de le couche intercalaire élastique et permet d'empêcher le contact électrique entre un élément piézorésistif et les éléments conducteurs disposés au droit de l'élément piézorésistif lorsqu'aucune pression n'est appliquée en surface de la dalle.

L'épaisseur de la couche intercalaire est généralement comprise entre 100 µm et 2 mm, de préférence entre 200 µm et 500 µm, notamment pour conserver une dalle de faible épaisseur n'impactant pas les performances mécaniques du revêtement de sol.

La couche intercalaire élastique peut être un film polymère tel qu'un film polyester ou polypropylène ou encore une mousse.

La couche intercalaire élastique permet éventuellement de définir un comportement d'enfoncement de la dalle de détection en fonction d'une pression exercée en surface de la dalle, notamment lorsque cette couche est une mousse. Lorsque la couche intercalaire élastique est une mousse, ce comportement d'enfoncement est déterminé par la densité de la mousse utilisée et son épaisseur. La couche intercalaire élastique peut notamment être réalisée à partir d'une couche de polymère thermoplastique moussé tel que du Poly(chlorure de vinyle) (PVC), du Polyuréthane (PU), du Polyuréthane thermoplastique (TPU), du caoutchouc, du Polyéthylène (PE) ou autre polymères pouvant être moussés. De façon générale, la densité de la couche intercalaire élastique si c'est une couche moussée est comprise entre 0,2 et 1,4, préférentiellement entre 0,8 et 1,2. La couche intercalaire peut être liée par tout moyen à la couche d'envers et à la couche capteur, notamment à l'aide d'une colle ou d'un adhésif. Préférentiellement, la couche intercalaire élastique et un film polymère recouvert d'un adhésif sur ses deux faces.

Ainsi, en fonction de l'épaisseur et éventuellement du comportement à l'enfoncement de la couche intercalaire élastique, il peut être défini un seuil à partir duquel la pression exercée sur la couche capteur, et donc sur un élément piézorésistif, va établir un contact entre les éléments conducteurs disposé au droit de l'élément piézorésistif. La valeur de ce seuil est importante car elle permet de dimensionner la dalle de détection en fonction du revêtement de sol qui va être disposé sur sa surface et des valeurs de pression que l'on souhaite mesurer.

A titre d'exemple, les valeurs de pression mesurées sont comprises entre 1 et 40 N/cm2. Ces valeurs peuvent correspondre à des impacts de balles ou ballons, des appuis de sportifs ou encore des chutes.

Un élément piézorésistif peut notamment être obtenu à partir d'encres piézorésistives. Ces encres présentent généralement une résistance électrique élevées lorsque qu'elles ne subissent aucune pression. En appliquant une pression au contact de l'encre cette résistance diminue, de sorte que la mesure de cette résistance par tout moyen connu peut être corrélée à la pression exercée.

Les éléments conducteurs permettent d'effectuer une mesure de la résistance de l'élément piézorésistif correspondante lorsque deux éléments conducteurs sont mis en contact électriques par l'intermédiaire de l'élément piézorésistif Une des méthodes permettant de mesurer la résistance de l'élément piézorésistif peut consister à connecter chacun des éléments conducteurs à un dispositif de mesure de la résistance électrique et de relever périodiquement les valeurs de résistance mesurées. En fonction de la valeur de résistance obtenue est de la relation entre la pression et la résistance du matériau utilisé pour obtenir l'élément piézorésistif, une pression d'appui peut être déduite.

La couche d'envers présente une épaisseur généralement comprise entre 20 µm et 250 µm, préférentiellement entre 80 µm et 150 µm. Cette épaisseur est généralement la plus fine possible afin de minimiser l'impact de la dalle de détection sur l'épaisseur totale du système comprenant la dalle et le revêtement de sol empilés. De façon générale la couche d'envers supporte les éléments conducteurs. La couche d'envers peut être obtenue à partir de tout polymère susceptible de supporter des éléments conducteurs, notamment des éléments conducteurs imprimés. La couche d'envers peut notamment être obtenues à partir d'un film polymère de polyamide, de polypropylène, de polyoléfines, de polyéthylène ou encore de polyéthylène téréphtalate.

La couche capteur présente une épaisseur généralement comprise entre 20 µm et 250 µm, préférentiellement entre 80 µm et 150 µm. Cette épaisseur est généralement la plus fine possible afin de minimiser l'impact de la dalle de détection sur l'épaisseur totale du système comprenant la dalle et le revêtement de sol empilés. De façon générale la couche capteur supporte les éléments piézorésistif. La couche capteur peut être obtenue à partir de tout polymère susceptible de supporter des éléments piézorésistifs, notamment des éléments piézorésistifs imprimés. La couche d'envers peut notamment être obtenues à partir d'un film polymère de polyamide, de polypropylène, de polyoléfines, de polyéthylène ou encore de polyéthylène téréphtalate.

De façon avantageuse, la couche capteur comprend une matrice d'éléments piézorésistifs et la couche d'envers comprend une matrice d'éléments conducteurs destinés à être connectés deux à deux et disposés deux à deux au droit d'un élément piézorésistif de la matrice.

La présence d'une matrice d'éléments piézorésistifs permet de couvrir une zone de détection plus importante en conservant des éléments piézorésistifs de petite taille. La mesure de pression n'est alors plus ponctuelle mais multipoints. Ceci permet notamment de détecter des objets de taille plus importante ou d'une façon plus précise en effectuant une moyenne de mesure à partir des résistances observées entre plusieurs éléments conducteurs connectés deux à deux.

De façon avantageuse, la couche d'envers comprend au moins trois éléments conducteurs disposés au droit de l'élément piézorésistif, dont un élément conducteur central et au moins deux éléments conducteurs périphériques progressivement éloignés de l'élément central, de sorte qu'une pression P1 permet de déplacer l'élément piézorésistif pour établir une connexion électrique entre l'élément conducteur central et l'élément conducteur périphérique le plus proche de l'élément conducteur central, et qu'une pression P2, supérieure à P1, permet de déplacer l'élément piézorésistif pour établir une connexion électrique entre l'élément conducteur central et les deux éléments conducteurs périphériques.

La présence d'au moins trois éléments conducteurs disposés au droit de l'élément piézorésistif, dont un élément conducteur central et au moins deux éléments conducteurs périphériques progressivement éloignés de l'élément central permet d'obtenir une de mesure de résistivité plus précise pour un même élément piézorésistif.

De façon préférentielle, les éléments conducteurs périphériques sont agencés de manière concentrique autour de l'élément central. Cet agencement permet de garantir une bonne mesure de la résistivité de l'élément piézorésistif, quelle que soit la direction de la pression exercée à la surface du revêtement de sol.

De façon particulière, l'élément piézorésistif présente une épaisseur maximale au droit de l'élément conducteur central et qui décroit progressivement au droit des éléments conducteurs périphériques en fonction de leur éloignement de l'élément central. Cet agencement permet également d'améliorer la précision de la mesure de la résistivité de l'élément piézorésistif en évitant l'apparition de seuils dus à un contact soudain entre l'élément piézorésistif et les éléments conducteurs. La résistance d'un élément piézorésistif dont l'épaisseur est constante diminue généralement trop rapidement en fonction de la pression exercée, de fait une décroissance progressive de l'épaisseur déposée permet de compenser cet effet et de linéariser la mesure de résistance obtenue.

Avantageusement, les éléments conducteurs sont réalisés dans une encre conductrice imprimée ou sont photogravés.

Avantageusement, les éléments conducteurs sont réalisés dans encre conductrice à base d'argent, de carbone, de graphite ou de cuivre. Les éléments conducteurs sont généralement réalisé dans une encre présentant une résistivité inférieure à 60 ohms /carré à 25,4 µm (1 mil), préférentiellement inférieure à 1 ohms /carré à 25,4 µm (1 mil), plus préférentiellement inférieure à 15 milli ohms /carré à 25,4 µm (1 mil), notamment pour les parties des éléments conducteurs au droit des éléments piézorésistifs. Une encre conductrice peut notamment être imprimée sur la couche d'envers par un procédé de sérigraphie bien connu de l'homme du métier ou encore par jet d'encre, pulvérisation ou dépôt par gouttelettes.

Avantageusement, l'élément piézorésistif est réalisé dans une encre piézorésistive imprimée. Une encre piézorésistive peut notamment être à base d'argent, de cuivre de carbone ou encore de graphite. Une encre piézorésistive peut notamment être imprimée sur la couche capteur par un procédé de sérigraphie bien connu de l'homme du métier ou encore par jet d'encre, pulvérisation ou dépôt par gouttelettes.

L'invention concerne également un système de détection comprenant une dalle de détection selon l'invention, un revêtement de sol comprenant au moins une matière thermoplastique tel que du polychlorure de vinyle, le revêtement de sol étant disposé sur la face supérieure de ladite dalle de détection de manière à permettre la détection d'une pression exercée à la surface du revêtement de sol.

De préférence, le revêtement de sol comprend au moins une couche moussé afin de présenter des capacités d'absorption de chocs ponctuels. Avantageusement, la couche moussée présente une épaisseur comprise entre 2 et 12 mm, préférentiellement entre 3 et 9 mm, plus préférentiellement entre 4 et 7 mm.

Le revêtement de sol peut se présenter sous forme de dalle, de lame ou en rouleau, préférentiellement en dalle.

Le système selon l'invention comprend par exemple un revêtement de sol se présentant sous la forme d'une structure multicouche comprenant, d'une manière générale, une couche supérieure d'usure en polymère tel que le polychlorure de vinyle (PVC) dont les fonctions principales sont la maîtrise de la glissance, la résistance à l'usure, la facilité de nettoyage et l'aspect décoratif, liée à une couche d'envers en mousse de polychlorure de vinyle d'une densité généralement comprise entre 0,20 et 0,50, préférentiellement entre 0,30 et 0,40 et d'une épaisseur généralement comprise entre 2 et 12 mm, préférentiellement entre 3 et 9 mm, plus préférentiellement entre 4 et 7 mm et permettant l'absorption des chocs ponctuels. A titre d'exemple un revêtement de sol satisfaisant la norme NF EN 14904 de juin 2006, selon laquelle le revêtement de sol doit absorber 25% des chocs pourra être utilisé.

De préférence, la couche d'usure du revêtement de sol peut être soudée à une couche d'usure adjacente, notamment par thermocollage. Un exemple d'une telle couche d'usure est une couche d'usure en PVC dont les lés peuvent être raccordés bord à bord par un cordon de soudure appliqué à chaud. Ceci assure une étanchéité parfaite du système permettant de protéger la dalle de détection selon l'invention.

Les éléments conducteurs et les éléments piézorésistifs pourront éventuellement être agencés respectivement sur la couche capteur et la couche d'envers de sorte qu'une certaine pression exercée sur les éléments conducteurs permet de déplacer les éléments conducteurs au travers de l'ouverture pour établir une connexion électrique entre les deux éléments conducteurs par l'intermédiaire dudit élément piézorésistif.

L'invention pourra également être déclinée pour un système de détection pour revêtement mural comprenant une dalle de détection selon l'invention, un revêtement mural comprenant au moins une matière thermoplastique, le revêtement mural étant disposé sur la face supérieure de ladite dalle de détection de manière à permettre la détection d'une pression exercée à la surface du revêtement mural. Une application possible et notamment un programme d'entrainement sportif mesurant la pression exercée par une personne sur une paroi verticale.

### DESCRIPTION SOMMAIRE DES FIGURES

D'autres avantages et caractéristiques ressortiront mieux de la description qui va suivre, donnée à titre d'exemple non limitatif, de la dalle de détection et du système de détection selon l'invention, à partir des dessins annexés dans lesquels :
- la figure 1 est une représentation schématique et en coupe d'un premier exemple de réalisation d'une dalle de détection selon l'invention ;
- les figure 2a et 2b sont respectivement une représentation schématique d'une couche d'envers et d'une couche capteur d'un second exemple de réalisation d'une dalle de détection selon l'invention ;
- la figure 3 est une vue détaillée en coupe illustrant le second exemple de réalisation d'une dalle de détection selon l'invention ;
- la figure 4 est une représentation schématique et en vue de dessus d'un exemple de système de détection selon l'invention ;
- la figure 5 est une représentation schématique et en vue éclatée du système de détection illustré à la figure 4 ;

### DESCRIPTION DETAILLEE DE L'INVENTION

L'invention concerne une dalle de détection (1) pour revêtement de sol permettant de conserver des performances mécaniques du revêtement de sol homogène sur toute la surface de détection, notamment de poinçonnement de réduction de force, de déformation verticale, de glissance, de rebond de balle et de restitution d'énergie.

La dalle selon l'invention peut également se présenter sous forme de panneau ou de lame.

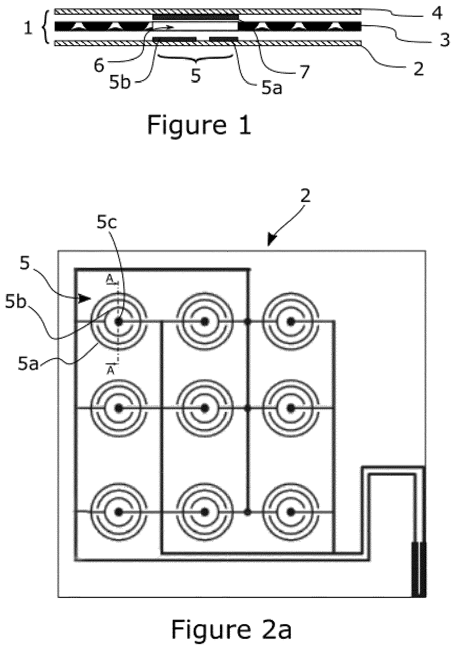

En référence aux figures 1, 2a, 2b et 3, la dalle de détection (1) selon l'invention comprend au moins successivement, une couche d'envers (2), une couche intercalaire élastique (3) et une couche capteur (4) liées ensemble. La couche d'envers (2) comprenant au moins deux éléments conducteurs (5a, 5b), la couche capteur comprenant au moins un élément piézorésistif (7) disposé au droit des deux éléments conducteurs (5), et la couche intercalaire élastique (3) présentant au moins une ouverture (6) mettant en vis-à-vis l'élément piézorésistif (7) et les deux éléments conducteurs de sorte qu'une certaine pression exercée sur ledit élément piézorésistif (7) permet de déplacer ledit élément piézorésistif au travers de l'ouverture (6) pour établir une connexion électrique entre les deux éléments conducteurs.

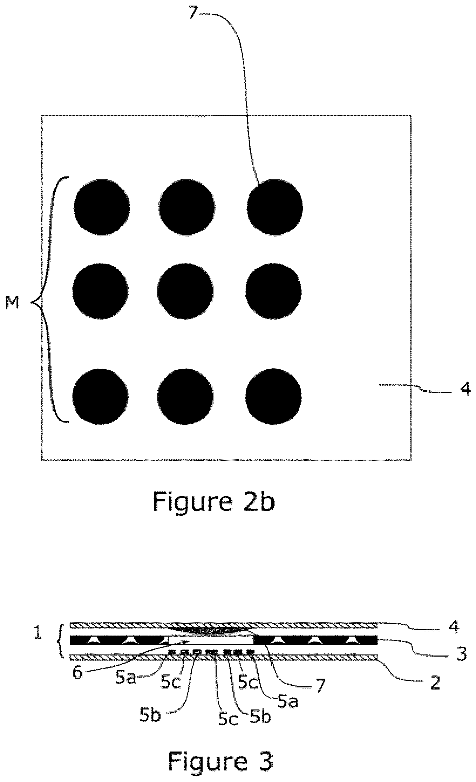

Les figures 2a, 2b et 3 illustrent un second mode de réalisation de la dalle selon l'invention. Dans ce mode de réalisation, la couche capteur (4) comprend une matrice (M) d'éléments piézorésistifs (7), et la couche d'envers (2) comprend une matrice d'éléments conducteurs destinés à être connectés deux à deux et disposés deux à deux au droit d'un élément piézorésistif (7) de la matrice. Sur la figure 2a, seule la couche d'envers (2) est représentée. La couche d'envers (2) comprend au moins trois éléments conducteurs (5) disposés au droit d'un élément piézorésistif (7), dont un élément conducteur central (5c) et au moins deux éléments conducteurs périphériques (5a, 5b) progressivement éloignés de l'élément central (5c), de sorte qu'une pression P1 permet de déplacer l'élément piézorésistif (7) pour établir une connexion électrique entre l'élément conducteur central (5c) et l'élément conducteur périphérique (5a) le plus proche de l'élément conducteur central (5c), et qu'une pression P2, supérieure à P1, permet de déplacer l'élément piézorésistif (7) pour établir une connexion électrique entre l'élément conducteur central (5c) et les deux éléments conducteurs périphériques (5a, 5b). Les éléments conducteurs périphériques (5a, 5b) sont agencés de manière concentrique autour de l'élément central (5c). Tel qu'illustré sur la figure 3 qui présente une vue détaillée en coupe A-A au niveau d'un élément piézorésistif, l'élément piézorésistif (7) présente une épaisseur maximale au droit de l'élément conducteur central (5c) et qui décroit progressivement au droit des éléments conducteurs périphériques (5a, 5b) en fonction de leur éloignement de l'élément central (5c).

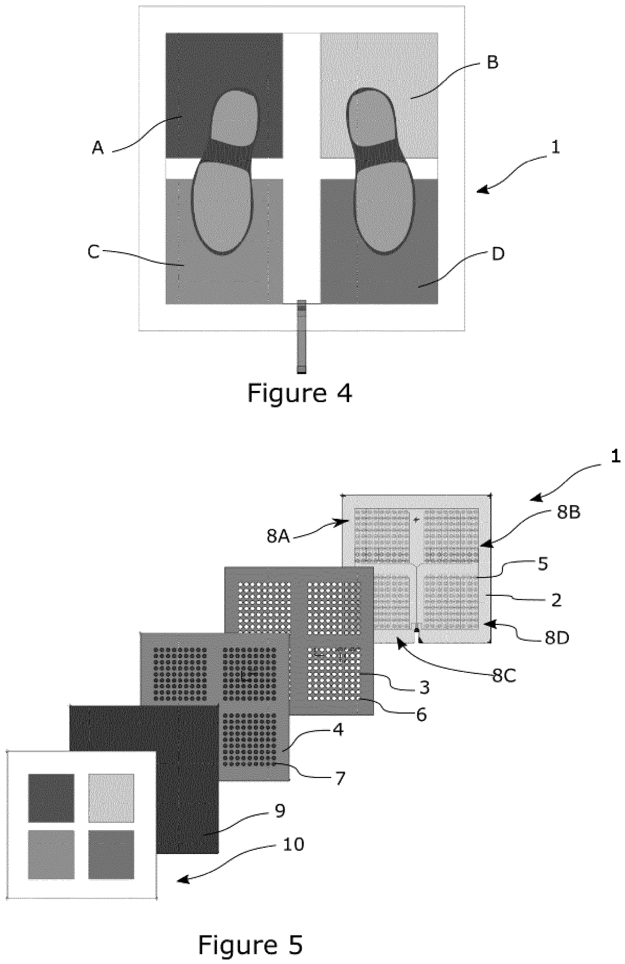

Les figures 4 et 5 représentent un système de détection pour revêtement de sol selon l'invention comprenant une dalle de détection selon l'invention (1). La dalle de détection (1) comprend une matrice d'éléments piézorésistifs (7), et la couche d'envers (2) comprend une matrice d'éléments conducteurs destinés à être connectés deux à deux et disposés deux à deux au droit d'un élément piézorésistif (7) de la matrice.

La figure 5 représente une vue éclatée du système de détection le détail des couches formant un système de détection comprenant une dalle de détection (1) selon l'invention et un revêtement de sol (10) comprenant au moins une matière thermoplastique, le revêtement de sol est disposé sur la face supérieure de ladite dalle de détection de manière à permettre la détection d'une pression exercée à la surface du revêtement de sol.

Le revêtement de sol (10) est par exemple lié à la face supérieure de la dalle de détection par l'intermédiaire d'un film adhésif double face (9) ou d'une couche de colle.

Le revêtement de sol comprend préférentiellement au moins une couche moussée. La couche moussée présente préférentiellement une épaisseur comprise entre 2 et 12 mm, préférentiellement entre 3 et 9 mm. Un revêtement de sol sportif satisfaisant la norme NF EN 14904 de juin 2006, selon laquelle le revêtement de sol doit absorber 25% des chocs peut par exemple être utilisé avec l'invention.

A titre d'exemple non limitatif, et selon la première forme de réalisation illustrée à la figure 1, la dalle de détection (1) pour revêtement de sol comprenant successivement, une couche d'envers (2) en Polyéthylène Téréphtalate (PET) d'une épaisseur de 125 µm, une couche intercalaire élastique (3) en film polymère en polypropylène de 330 µm recouvert d'un adhésif sur ses deux faces et une couche capteur (4) en Polyéthylène Téréphtalate (PET) d'une épaisseur de 125 µm, liées ensemble. La couche d'envers (2) comprend deux éléments conducteurs (5a, 5b) réalisés dans une encre conductrice à base d'argent imprimés par sérigraphie. La couche capteur (4) comprend un élément piézorésistif (7) réalisé dans une encre piézorésistive d'une épaisseur de 4µm environ et d'un diamètre d'environ 1cm. Cet encre est à base de noir de carbone et présente un coefficient de Température positif (CTP). L'encre est déposée par sérigraphie sur la couche capteur (4). L'élément piézorésistif est disposé au droit des deux éléments conducteurs (5a, 5b), et la couche intercalaire élastique (3) présente une ouverture (6) mettant en vis-à-vis l'élément piézorésistif (7) et les deux éléments conducteurs (5a, 5b) de sorte qu'une certaine pression exercée sur ledit élément piézorésistif (7) permet de déplacer ledit élément piézorésistif (7) au travers de l'ouverture pour établir une connexion électrique entre les deux éléments conducteurs (5).
Afin de mesurer la pression exercée sur l'élément piézorésistif (7), un ohmmètre est connecté aux éléments conducteurs (5a, 5b) par l'intermédiaire d'un bornier à vis, les éléments conducteurs (5a, 5b) s'étendant au-delà de la zone de mesure. Ce premier mode de réalisation permet la mesure d'une pression sur l'élément piézorésistif (7) comprise entre 1 et 40 N/cm². La dalle obtenue est suffisamment robuste pour ne pas dégrader la résistance d'un revêtement de sol lié à sa surface à un passage de 25000 cycles d'une chaise à roulettes tel que défini dans la norme ISO 20 4918 ou NF EN 425. De par sa faible épaisseur, la dalle obtenue est facilement intégrable sans modifications du revêtement de sol.

A titre d'exemple non limitatif, et selon la seconde forme de réalisation de la dalle selon l'invention illustrée sur les figures 2a, 2b et 3, il est réalisé une dalle de détection comprenant successivement, une couche d'envers (2) en Polyéthylène Téréphtalate (PET) d'une épaisseur de 125 µm, une couche intercalaire élastique (3) en film polymère en polypropylène de 330 µm et une couche capteur (4) en Polyéthylène Téréphtalate (PET) d'une épaisseur de 125 µm, liées ensemble. La couche capteur (4) comprend une matrice (M) d'éléments piézorésistifs (7) et la couche d'envers (2) comprend une matrice d'éléments conducteurs destinés à être connectés deux à deux et disposés deux à deux au droit d'un élément piézorésistif (7) de la matrice. Seul neufs éléments piézorésistifs et leurs éléments conducteurs placés au droit sont représentés. La couche capteur (4) comprend ainsi plusieurs éléments piézorésistifs circulaires (7) réalisés dans une encre piézorésistive d'une épaisseur de maximale de 10µm décroissant progressivement jusqu'à 4µm environ et d'un diamètre d'environ 1cm. Ce second mode de réalisation permet d'augmenter la surface de mesure de la dalle en utilisant une pluralité d'éléments piézorésistifs. La couche d'envers (2) comprend au moins trois éléments conducteurs (5) disposés au droit d'un élément piézorésistif (7), dont un élément conducteur central (5c) et au moins deux éléments conducteurs périphériques (5a, 5b) progressivement éloignés de l'élément central (5c), la mesure obtenue est ainsi beaucoup plus précise et il est plus aisé de corréler la résistance de l'élément piézoélectrique mesuré à la pression qui lui est appliqué.

A titre d'exemple non limitatif, et selon une forme de réalisation du système de détection illustré sur les figures 4 et 5, il est réalisée un système de détection comprenant une dalle de détection (1) pour revêtement de sol reprenant le principe du second mode de réalisation illustré aux figures 2a, 2b et 3 et comprenant successivement, une couche d'envers (2) en Polyéthylène Téréphtalate (PET) d'une épaisseur de 125 µm, une couche intercalaire élastique (3) en film polymère en polypropylène de 330 µm et une couche capteur (4) en Polyéthylène Téréphtalate (PET) d'une épaisseur de 125 µm, liées ensemble. La dalle est liée à un revêtement de sol sportif en dalle réalisé à partir de PVC, satisfaisant la norme NF EN 14904 de juin 2006 et présentant une épaisseur de 7mm. Le revêtement de sol (10) comprend successivement une couche d'usure en PVC (non représentée), une couche intercalaire calandrée (non représentée), en PVC et une couche d'envers en PVC moussée de 5,7 mm d'épaisseur (non représentée). La couche d'envers est liée à la face supérieure de la dalle de détection par l'intermédiaire d'un adhésif double face (9).

La couche capteur (4) comprend une matrice (M) de 324 éléments piézorésistifs (7), la couche d'envers (2) comprend quatre matrices d'éléments conducteurs (8A, 8B, 8C, 8D) destinés à être connectés deux à deux et disposés deux à deux au droit d'un élément piézorésistif (7) de la matrice. Chacune des matrices d'éléments conducteurs (8A, 8B, 8C, 8D) permet de mesurer la pression exercée respectivement sur la zone A, B, C ou D à raison de 81 éléments piézorésistifs par zone de détection. Chaque zone s'étend sur 215 mm par 230 mm. Les figures 2a et 2b présentent le détail pour 9 éléments piézorésistifs et les éléments conducteurs (5a, 5b, 5c) correspondant. La mesure de la pression exercée sur chaque zone de détection est effectuée grâce à trois éléments conducteurs (5a, 5b, 5c) spécifiques à chaque des zones.

Le système permet ainsi d'effectuer des mesures dans plusieurs zones de détection A, B, C, D. Pour chacune de ces zones de détection, la matrice d'éléments conducteurs comprend pour trois éléments conducteurs (5a, 5b, 5c) disposés au droit de chaque élément piézorésistif (7), dont un élément conducteur central (5c) et au moins deux éléments conducteurs périphériques (5a, 5b) progressivement éloignés de l'élément central (5c). Les éléments conducteurs périphériques (5a, 5b) sont agencés de manière concentrique autour de l'élément central (5c). Chaque zone de détection.

Les éléments conducteurs (5a, 5b, 5c) sont réalisés dans une encre conductrice à base d'argent déposée sur la couche d'envers par sérigraphie et présentant une résistivité inférieure à 15 milli ohms /carré à 25,4 µm (1 mil) pour la partie des éléments conducteurs n'étant pas au droit des éléments piézorésistifs. Pour la partie des éléments conducteurs directement au droit des éléments piézorésistifs, les éléments conducteurs sont réalisées dans une encre conductrice à base de graphite sérigraphie et présentant une résistivité inférieure 60 ohms /carré à 25,4 µm (1 mil),

Les éléments piézorésistif (7) sont similaires à ceux illustrés en relation avec la figure 3. L'encre est déposée par sérigraphie sur la couche capteur (4).

L'élément piézorésistif (7) présente une forme bombée de manière à présenter une épaisseur maximale au droit de l'élément conducteur central (5c) et qui décroit progressivement au droit des éléments conducteurs périphériques (5a, 5b) en fonction de leur éloignement de l'élément central (5c). Ces éléments piézorésistifs sont donc de forme circulaires (7) et d'une épaisseur de maximale de 10µm décroissant progressivement jusqu'à 4µm environ et d'un diamètre d'environ 1cm.

Afin de mesurer la pression exercée sur l'élément piézorésistif (7), un ohmmètre est connecté aux éléments conducteurs (5a, 5b, 5c) de chaque zone par l'intermédiaire d'un bornier à vis, les éléments conducteurs s'étendant au-delà des zones de détection. L'ohmmètre est relié à une carte d'acquisition permettant de relever et enregistrer les mesures de résistivité pour chacune des zones à une période inférieure à 10ms. La résistivité à vide mesurée pour un élément piézorésistif est comprise entre 100 kOhms et 1 MOhms. La résistivité pour une pression sur un élément piézorésistif de 3N/cm² est comprise entre 1 kOhm et 10 kOhms. La résistivité pour une pression sur un élément piézorésistif de 30N/cm² est comprise entre 100 Ohms et 2 kOhms.

Ce mode de réalisation permet la mesure précise d'une pression sur le revêtement de sol comprise entre 1 et 40 N/cm². La mesure effectuée est suffisamment vélosensible pour permettre de mesurer des impacts de balle ou la pression exercée par le pied d'une personne. La mesure effectuée permet de détecter sur chaque zone un poids de 35kg jusqu'à plusieurs centaines de kilogrammes. D'autre part, de par la faible épaisseur de la dalle de détection, les performances mécaniques du revêtement de sol reste homogène sur toute les zones de détection, notamment de poinçonnement de réduction de force, de déformation verticale, de glissance, de rebond de balle et de restitution d'énergie.
De plus, le revêtement de sol utilisé étant un revêtement de sol PVC, les bords de ce revêtement peuvent aisément être thermosoudés l'un à l'autre pour être rendu étanche vis-à-vis du nettoyage. Ceci permet de protéger la dalle de détection sur le long terme.

## Revendications

1. Dalle de détection (1) pour revêtement de sol, ***caractérisée* en ce qu'**elle comprend au moins successivement, une couche d'envers (2), une couche intercalaire élastique (3) et une couche capteur (4) liées ensemble, la couche d'envers (2) comprend au moins deux éléments conducteurs (5a, 5b), la couche capteur (4) comprend au moins un élément piézorésistif (7) disposé au droit des deux éléments conducteurs (5), et la couche intercalaire élastique (3) présente au moins une ouverture (6) mettant en vis-à-vis l'élément piézorésistif (7) et les deux éléments conducteurs (5a, 5b) de sorte qu'une certaine pression exercée sur ledit élément piézorésistif (7) permet de déplacer ledit élément piézorésistif (7) au travers de l'ouverture pour établir une connexion électrique entre les deux éléments conducteurs (5).

2. Dalle selon la revendication 1, ***caractérisée* en ce que** la couche capteur (4) comprend une matrice d'éléments piézorésistifs (7), et la couche d'envers (2) comprend une matrice d'éléments conducteurs destinés à être connectés deux à deux et disposés deux à deux au droit d'un élément piézorésistif (7) de la matrice.

3. Dalle selon la revendication 1, ***caractérisée* en ce que** ladite couche d'envers (2) comprend au moins trois éléments conducteurs (5) disposés au droit de l'élément piézorésistif (7), dont un élément conducteur central (5c) et au moins deux éléments conducteurs périphériques (5a, 5b) progressivement éloignés de l'élément central (5c), de sorte qu'une pression P1 permet de déplacer l'élément piézorésistif (7) pour établir une connexion électrique entre l'élément conducteur central (5c) et l'élément conducteur périphérique (5a) le plus proche de l'élément conducteur central (5c), et qu'une pression P2, supérieure à P1, permet de déplacer l'élément piézorésistif (7) pour établir une connexion électrique entre l'élément conducteur central (5c) et les deux éléments conducteurs périphériques (5a, 5b).

4. Dalle selon la revendication 1, ***caractérisée* en ce que** les éléments conducteurs périphériques (5a, 5b) sont agencés de manière concentrique autour de l'élément central (5c).

5. Dalle selon la revendication 3, ***caractérisée* en ce que** l'élément piézorésistif (7) présente une épaisseur maximale au droit de l'élément conducteur central (5c) et qui décroit progressivement au droit des éléments conducteurs périphériques (5a, 5b) en fonction de leur éloignement de l'élément central (5c).

6. Dalle selon la revendication 1, ***caractérisée* en ce que** les éléments conducteurs (5a, 5b) sont réalisés dans une encre conductrice imprimée.

7. Dalle selon la revendication 1, ***caractérisée* en ce que** les éléments conducteurs (5a, 5b) sont photogravés.

8. Dalle selon la revendication 1, ***caractérisée* en ce que** l'élément piézorésistif (7) est réalisé dans une encre piézorésistive imprimée.

9. Dalle selon la revendication 1, ***caractérisée* en ce que** la couche intercalaire élastique (3) présente une épaisseur comprise entre 100 µm et 2 mm, de préférence entre 200 µm et 500 µm.

10. Dalle selon la revendication 1, ***caractérisée* en ce que** la couche intercalaire élastique (3) est un film polymère.

11. Système de détection comprenant une dalle de détection (1) selon l'une quelconque des revendications 1 à 10, un revêtement de sol comprenant au moins une matière thermoplastique, ***caractérisé* en ce que** le revêtement de sol est disposé sur la face supérieure de ladite dalle de détection de manière à permettre la détection d'une pression exercée à la surface du revêtement de sol.

12. Système de détection selon la revendication 11, **caractérisé en ce que** le revêtement de sol comprend au moins une couche moussée.

13. Système de détection selon la revendication 12, **caractérisé en ce que** la couche moussée présente une épaisseur comprise entre 2 et 12 mm, préférentiellement entre 3 et 9 mm.
